Europäisches Patentamt

European Patent Office

Office européen des brevets

(19)

(11) Publication number: 0 031 620
A2

(12) EUROPEAN PATENT APPLICATION

(21) Application number: 80201212.0

(22) Date of filing: 18.12.80

(51) Int. Cl.³: B 29 F 1/12, F 16 L 47/06

(30) Priority: 21.12.79 NL 7909294

(43) Date of publication of application: 08.07.81
Bulletin 81/27

(84) Designated Contracting States: AT BE CH DE FR GB IT LI LU NL SE

(71) Applicant: WAVIN B.V., 251 Händellaan, NL-8031 EM Zwolle (NL)

(72) Inventor: Beune, Johannes Hendrikus, 62 Beekberg, NL-7772 DR Hardenberg (NL)
Inventor: de Putter, Warner Jan, 11 Jan van Arkelstraat, NL-7772 AN Hardenberg (NL)

(74) Representative: van der Veken, Johannes Adriaan et al, EXTERPATENT 3 & 4 Willem Witsenplein, NL-2596 BK The Hague (NL)

(54) Method for uniting a plastics fixation part attachable to an end portion of a pipe part with a sealing body, plastics fixation part, plastics pipe provided with said fixation part and apparatus for moulding a fixation part.

(57) Method for uniting a plastics fixation part 1 with a sealing body 2, comprising a head end 3 and a sealing sleeve 4, by first moulding the sealing body 2 and subsequently moulding the plastics fixation part 1 around the head end 3 of the sealing body 2, thereby protecting the sealing sleeve 4. The fixation part 1 is provided with corrugations 12a, 13a for connecting the fixation part with a socket pipe 21 provided with corrugations on its outer side.

The method may be carried out in an apparatus comprising a first mould part 5, a second mould part 6 and a third mould part 7, forming together a moulding space 8, 8a for forming the sealing body and a fourth mould part 10 replacing the first mould part 5, forms a moulding space 11 for moulding the fixation part 1.

**Method for uniting a plastics fixation part attachable to an
end portion of a pipe part with a sealing body, plastics
fixation part, plastics pipe provided with said fixation
part and apparatus for moulding a fixation part.**

The invention relates to a method for uniting a plastics
fixation part being attachable to an end portion of a pipe
part, with a sealing body comprising a head end and a sealing
sleeve, in order to obtain a pipe connection.

Such a method is known in the art. In said known method a
resilient sealing body comprising a head end and a sealing
sleeve, is accommodated in a rigid thermoplastics fixation
part, whereupon the fixation part is attached upon the end
portion of a socket. As both the surface of the fixation part
cooperating with the outer side of the socket pipe part and
the outer surface of said socket pipe part cooperating with
the fixation part are corrugated, the resilient properties
of the head end of the sealing body permit said fixation part
to undergo an axial movement when the latter vigorously hits
the bottom of the respective socket pipe part, which movement
is subsequently terminated.

In view of the latter, any damages to socket pipe parts of
the abovementioned types and more particularly, damages to
the fixation part, are avoided.

Said known method presents the disadvantage that uniting the

- 2 -

fixation part with the sealing body is very labourious, and therefore, rather expensive.

Furthermore, said method can hardly be automized so that many manual operations have to be applied.

The present invention aims to provide a method, which alleviates the abovementioned disadvantages.

This object is attained in accordance with the present invention in that after having moulded the sealing body, a fixation part of plastics is moulded from a plastics material around the head end of the sealing body, whilst protecting the sealing sleeve.

In the method in accordance with the invention the sealing body is therefore first moulded, preferably from a thermoplastics synthetic material having resilient properties, and subsequently the fixation part is moulded around the head end of the sealing body by injection moulding of a plasticized plastic.

Due to the integrating properties of thermoplastics material used for the fixation part and of thermoplastics synthetic material having resilient properties such as thermoplastic rubbers being used for the sealing body, an optimum connection of the said two parts can be obtained.

Instead of a thermoplastics rubber a cold-curing rubber may also be used.

Although a good adherence between a thermoplastics rubber and a thermoplastics material of the fixation part is very beneficial, said adherence is not essential, as an adaptation of the shape of the head end of the sealing body and the ad-

-3-

joining portion of the fixation part, could also lead to a firm  mechanical connection between said sealing body and said fixation part.

A suitable thermoplastics rubber properly adhering to thermoplastics, is ARNITEL from AKZO.

A sealing body of synthetic material having resilient properties such as a thermoplastics rubber is very advantageously moulded in a first moulding space, whereupon a second moulding space is formed adjacent the moulded head end of the sealing body, while maintaining the first moulding space for the sealing sleeve, whereafter the fixation part is moulded in said second moulding space.

The present invention also relates to a plastics fixation part with a sealing body, comprising a head end and a sealing sleeve, in which the fixation part has been moulded from a plastics material around a premoulded sealing body, consisting of a resilient material, more particularly a plastics rubber.

The present invention furthermore relates to apparatus for performing the method in accordance with the invention, comprising a first mould part, a second mould part and a third mould part, together bounding a first moulding space, whilst the apparatus comprises a fourth mould part forming a second moulding space beside the first moulding space, if said fourth mould part replaces the first mould part.

The invention will be illustrated with respect to an embodiment in the drawing, wherein:

Figure 1 shows a cross-section through a fixation part with a sealing body according to the invention;

Figure 2 shows a configuration of the various different

-4-

mould parts during the first step of the method for moulding a sealing body;

Figure 3 shows the configuration of the mould parts during the second step of the method according to the present invention;

Figure 4 shows a fixation part with a sealing body obtained according to the method of the invention and being removably attached to a socket pipe part;

Figure 5 shows another embodiment of a fixation part with a sealing body obtained according to the method of the present invention.

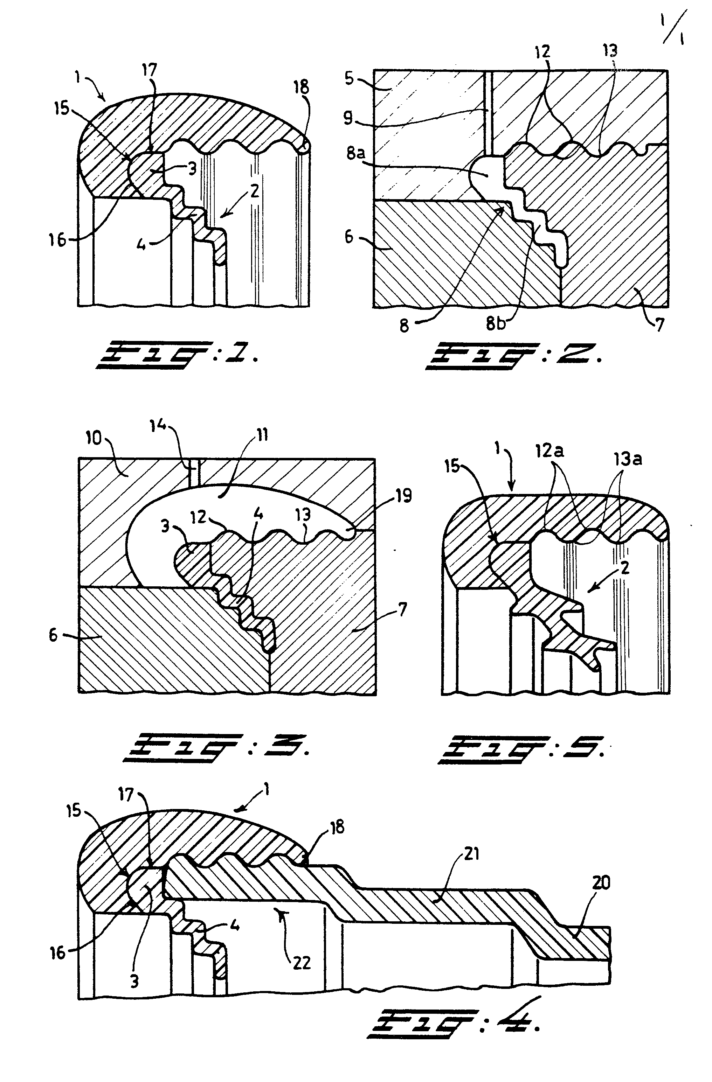

Figure 1 shows a fixation part 1, consisting of a thermoplastics material, particularly polyethylene or polypropylene, said fixation part being firmly connected with a sealing body 2 comprising a head end 3 and a sealing sleeve 4.

Moulding said fixation part 1 with sealing body proceeds according to the embodiment of figures 2 and 3.

Figure 2 shows a first mould part 5, engaging a second mould part 6, and a third mould part 7, thereby forming a first moulding space 8. Said first moulding space comprises a moulding space portion 8a for moulding the head end 3 of the sealing body and a moulding space part 8b, for moulding the sleeve 4.

In said figure the sealing sleeve presents a stepped configuration.

Through injection supply channel 9 thermoplastics rubber is injected into the first moulding space 8 and fills said space, so that a sealing rubber body 2 is shaped. The sealing body presents a steplike shape.

-5-

After having produced said sealing body 2, the first mould part 5 is removed, whilst the second mould part 6 and the third mould part 7 are maintained, however, in such a way, that the sealing sleeve 4, moulded in moulding space region 8b, remains well supported and protected against any contact with other products.

Subsequently a fourth mould part 10 is installed which provides second moulding space 11. Said moulding space 11, arranged between fourth mould part 10, second mould part 6 and third mould part 7, is entirely filled with thermoplastics material, supplied by injection of said material through plastics supply channel 14 (Fig. 3). Said thermoplastics material may for instance consist of a polyolefin such as a polyethylene or of polypropylene.

By using certain thermoplastics rubbers for filling the spaces 8a and 8b, while moulding the sealing body 2, an optimum connection can be obtained between surface 15 of head end 3 of sealing body 2, with a fixation part 1 of thermoplastics moulded in the second moulding space 11. When, however, a proper mechanical connection is used, the aforedescribed connection is not essential.

Moulding seams 16, which may be formed by using a subdivided first mould part 5, will not give rise to any sealing problems, as said moulding seams are received in correspondingly shaped recesses of the fixation part 2, so that an optimum seal is accomplished by melting together the surface 15 of the head end 3 of the sealing body 2 and the inner surface 17 of the fixation part, facing the latter assembly.

After having moulded said fixation part 1, the fourth mould part 10 is first removed and subsequently the third mould part 7, an operation which can be properly effected in that

-6-

the thickness of the fixation part decreases towards its free end 18, due to a decrease of the cross section of the moulding space 11 towards its free end 19.

The deformation of part 1a of the fixation part 1, further permits the third mould part 7, notwithstanding the wave crests 12 and the wave valleys 13, to be easily removed. The wave crests 12 and wave valleys 13 form corrugations 12a, 13a on the inner side of the fixation part 1.

Finally the second mould part 6 is removed.

As can be seen, the sealing body 6 is not deformed during the removal of the respective mould parts during the moulding process.

Figure 4 shows the mounting of the pre-formed fixation part 1, with the sealing body 2 upon a socket part 21 of a pipe part 20 of polyvinylchloride. The inner end of said socket part 21 comprises a chamber 22 for receiving the sealing sleeve 4. The outer side of the socket part 21 is provided with corrugations engaging the corrugations 12a, 13a on the inner side of the fixation part 1.

Figure 5 shows a modified embodiment of the sealing body 2, comprising seal-improving ribs, being firmly connected with a fixation part 1 of polypropylene.

In order to obtain said fixation part, one proceeds in a manner corresponding to the manner of moulding the fixation part of fig. 1. It should be noted that in the fixation part of fig. 5 a secure anchoring of the sealing body in the recess or cavity 15 is accomplished.

Claims:

1.      Method for uniting a plastics fixation part 1 being attachable to an end portion of a pipe part, with a **sealing body 2** comprising a head end 3 and a sealing sleeve 4, characterized in that after having moulded the sealing body (2) a fixation part (1) of plastics is moulded from a plastics material around the head end (3) of the sealing body (2), whilst protecting the sealing sleeve (4).

2,      Method according to claim 1, in which the sealing body (2) is formed from a material properly adhering to the fixation part (1).

3.      Method according to claims 1 or 2, in which a sealing body (2) of a resilient plastics material is moulded in a first moulding space (8, 8a) whereupon a second moulding space (11) is formed beside the moulded head end (3) of the sealing body (2) while maintaining the first moulding space (8b) for the sealing sleeve (4) while subsequently the fixation part (1) is moulded in said second moulding space (11).

4.      Method according to claims 1 to 3, comprising one or more of the following features:
a)      the inner side   of an end portion of the fixation part (1) is corrugated;
b)      the fixation part (1) comprises an end portion (18), the thickness of which decreases towards its extremity;
c)      the sealing sleeve (4) is moulded in a steplike shape;
d)      the fixation part (1) consists of a polyolefin, such as polyethylene or polypropylene;
e)      the sealing body (2) is moulded from a **cold-curing** rubber, or from a thermoplastics rubber;
f)      the pipe part consists of polyvinylchloride.

-2-

5. Plastics fixation part 1 with a sealing body 2 comprising a head end 3 and a sealing sleeve 4, in which the fixation part (1) has been moulded from a plastics material around a premoulded sealing body (2).

6. Plastics fixation part according to claim 5, in which the sealing body (2) is adhered to the fixation part consisting of a thermoplastics, more particularly of a polyolefin.

7. Plastics fixation part according to claim 5, in which the sealing body (2) is moulded from a resilient plastics material preferably from a cold-curing rubber or from a thermoplastics rubber.

8. Plastics fixation part according to claims 5 to 7, in which the inner side of the fixation part (1) comprises a corrugated end portion (12a, 13a) and/or the thickness of the fixation part (1) decreases towards its free end (18) starting from the corrugated end portion (12a, 13a) and/or the sealing sleeve (4) has a steplike shape.

9. Pipe part with socket end, provided with a fixation part (1) as claimed in claims 5 to 8 or obtained according to the method of claims 1 to 4.

10. Apparatus for moulding a fixation part 1 with a sealing body 2, comprising at least a first mould part 5, a second mould part 6 and a third mould part 7, together bounding a first moulding space (8, 8a) in which a fourth mould part (10) forms a second moulding space (11) beside the first moulding space (8, 8a) by replacing the first mould part (5) with said fourth mould part.

0031620

1/1

Fig.1.

Fig.2.

Fig.3.

Fig.5.

Fig.4.